# EUROPÄISCHE PATENTSCHRIFT

(11) **EP 2 125 641 B1**
(45) Veröffentlichungstag und Bekanntmachung des Hinweises auf die Patenterteilung: **14.12.2016**
(21) Anmeldenummer: 08708421.6
(22) Anmeldetag: 30.01.2008
(51) Int. Cl.: C02F 5/08, C02F 103/42

(54) **WARMWASSERGERÄT**
HOT WATER UNIT
APPAREIL DE PRÉPARATION D'EAU CHAUDE

(30) Priorität: 23.02.2007 DE 102007008913
(43) Veröffentlichungstag der Anmeldung: 02.12.2009
(73) Patentinhaber: BSH Hausgeräte GmbH, 81739 München (DE)
(72) Erfinder: HEILMAIER, Marion, 83317 Teisendorf (DE); KUSSTATSCHER, Herbert, 83371 Stein a.d. Traun (DE); REHBERG, Kay, 92224 Amberg (DE)
(86) Internationale Anmeldenummer: PCT/EP2008/051106
(87) Internationale Veröffentlichungsnummer: WO 2008/101775

(56) Entgegenhaltungen:
- EP-A- 1 717 379
- CH-A- 201 562
- GB-A- 1 481 728
- GB-A- 2 356 561
- JP-A- 10 300 235
- JP-A- 2000 189 955
- JP-A- 2001 252 326
- US-A- 4 334 881
- US-A1- 2004 238 450

## Beschreibung

Die vorliegende Erfindung betrifft ein Warmwassergerät.

Warmwassergeräte für den Haushaltsgebrauch sind im Stand der Technik in einer Vielzahl verfügbar, z.B. als Durchlauferhitzer, Warmwasserspeicher oder Kleinspeicher. All diesen Geräten ist die Problematik gemeinsam, dass diese im Geräteinnern zum Verkalken neigen, was durch die im Wasser vorliegende Wasserhärte verursacht wird. Als Wasserhärte wird die Konzentration der im Wasser gelösten Ionen der Erdalkalimetalle bezeichnet. Die Wasserhärte setzt sich zusammen aus der temporären Härte oder Karbonathärte und der permanenten Härte. Im Wasser vorliegendes Hydrogenkarbonat bildet mit Kalzium- bzw. Magnesiumionen schwer lösliches Kalziumkarbonat bzw. Magnesiumkarbonat. Diese Ablagerungen entstehen besonders an Wärmequellen wie Heizelementen, führen langfristig zur Überhitzung und können diese Elemente schädigen. Die sogenannte Nicht-Karbonathärte oder auch permanente Härte wird durch Anionen wie Chloride und Sulfate hervorgerufen, bildet sich temperaturunabhängig und lässt sich durch Erwärmen des Wassers nicht entfernen. Deren Calcium- und Magnesium-Salze können nicht durch Kochen ausgefällt werden Dies bedeutet auch, dass die permanente Wasserhärte bei der Bekämpfung der Verkalkung von Heizelementen kaum eine Rolle spielt. Aber nicht nur an den Heizelementen spielt die Härte des Wassers eine Rolle, sondern auch an den Oberflächen der betroffenen sanitären Anlagen. Der Verbraucher möchte gerne nach der Körperreinigung die betroffenen Oberflächen, wie z.B. die Kacheln oder Armaturen abspülen können, ohne dass Kalkflecken zurückbleiben.

Darüber hinaus wünscht der Verbraucher sich mehr und mehr Warmwassergeräte, bei denen er dem Wasser Pflegemittel zufügen kann, um so die subjektiv wahrnehmbaren Eigenschaften des Wassers zu verändern; so sind z.B. Mineralstoffmischungen beliebt, die dem Dusch- oder Badewasser zugesetzt eine belebende bzw. vitalisierende Wirkung auf den Anwender haben.

Die DE 1 235 827 beschreibt ein Verfahren zur Aufbereitung des Wassers in Warmwasserversorgungsanlagen, bei dem ein Feindosierapparat in der Weise eingesetzt wird, dass Stoffe, die die Qualität des Wassers chemisch verändern, dem Wasser beigefügt werden. Weitere Wasserenthärtungsvorrichtungen sind aus der CH 201562 A und JP 2000189955 A bekannt.

Werden nun Mittel, die die Härte des Wassers vermindern, sowie Pflegemittel, die die subjektiv wahrnehmbaren Eigenschaften des Wassers ändern, mit einem Feindosierapparat beigefügt, so besteht die Gefahr, dass sich die die Härte mindernden Mittel sowie die Pflegemittel gegenseitig beeinflussen bzw. miteinander chemisch reagieren.

Somit liegt der vorliegenden Erfindung die Aufgabe zugrunde, ein Warmwassergerät zur Verfügung zu stellen, das einerseits die bekannte Kalkproblematik vermeidet, und gleichzeitig in einfacher und kostengünstiger Weise es dem Verbraucher ermöglicht, durch Zusatz von Pflegemitteln die subjektiv empfundene Wasserqualität zu beeinflussen.

Gelöst wird diese Aufgabe mit den Merkmalen des Patentanspruchs 1. Vorteilhafte Aus- und Weiterbildungen der Erfindung, welche einzeln oder in Kombination miteinander eingesetzt werden können, sind Gegenstand der Unteransprüche.

Das erfindungsgemäße Warmwassergerät mit einem Wasserstrang, welches mindestens einen Wasserzulauf, der von einem Wandanschluss zu dem Warmwassergerät führt, sowie mindestens einen Wasserablauf, der vom Gerät zu einer Verbrauchsstelle hin führt, sowie mindestens eine Heizvorrichtung aufweist, und welches an seinem Wasserzulauf mindestens ein Mittel zum Dosieren von Zusatzstoffen zur chemischen Veränderung der Wasserqualität aufweist, zeichnet sich dadurch aus, dass in seinem Wasserstrang mindestens ein zweites Mittel zum Dosieren von Zusatzstoffen zur chemischen Veränderung der Wasserqualität angeordnet ist, wobei das zweite Mittel zum Dosieren von Zusatzstoffen am Ablauf des Warmwassergerätes angeordnet ist.

Dadurch wird gegenüber dem Stand der Technik eine erhebliche Verbesserung hinsichtlich der Wasserqualität sowie der Gerätelebensdauer erzielt. Dadurch, dass das Warmwassergerät zwei getrennte Mittel zum Dosieren von Zusatzstoffen zur chemischen Veränderung der Wasserqualität aufweist, ist es möglich, die Qualität des Wassers so zu verändern, dass die Heizelemente des Warmwassergerätes vor einem Verkalken geschützt werden und zugleich die subjektiv wahrnehmbaren Eigenschaften des Wassers nach dem Wunsch des Verbrauchers verändert werden können. So können Stoffe zugesetzt werden, die die härtebildenden Faktoren des Wassers binden ohne sie zu entfernen; dadurch ist das Gerät vor einer Verkalkung geschützt. Möchte der Anwender die Beschaffenheit des Wassers durch pflegende und/oder deodorierende Stoffe noch weiter verändern, so kann er dies tun, indem er das zweite Dosiermittel hierfür einsetzt. Hierdurch wird sichergestellt, dass die Beschaffenheit des Wassers den Wünschen des Verbrauchers entspricht. Je nach Bedarf kann er dabei über das zweite Mittel zum Dosieren von Zusatzstoffen dem Wasser Stoffe zusetzen, die einen pflegenden, erfrischenden oder Wellness-Effekt auf ihn ausüben.

Das zweite Mittel zum Dosieren von Zusatzstoffen ist am Wasserablauf des Warmwassergerätes angeordnet. Diese Anordnung weist den Vorzug auf, dass das Geräteinnere nicht durch Substanzen, welche die subjektiv wahrnehmbaren Eigenschaften des Wassers verändern sollen, belastet wird. Störende Wartezeiten, die dadurch entstehen können, dass z.B. ätherische Öle zugesetzt und durch das Geräteinnere gespült werden, und erst wieder ausgespült werden müssen, werden somit in vorteilhafter Weise vermieden. Auch wird das Risiko vermieden, dass zugesetzte Mineralstoffmischungen beim Durchströmen des Geräteinnern zu einer verstärkten Verkalkung oder Verschmutzung führen. Gegebenenfalls kann, sofern keine Notwendigkeit besteht, das Wasser vor dem Warmwassergerät zu behandeln, nur das zweite Mittel eingesetzt werden. Gegebenenfalls kann, sofern keine Notwendigkeit besteht, das Wasser nach dem Warmwassergerät zu behandeln, nur das erste Mittel eingesetzt werden.

Als besonders vorteilhaft hat es sich erwiesen, wenn das Warmwassergerät an seinem Wasserablauf mindestens eine Filtervorrichtung zum mechanischen Entfernen von Verunreinigungen des Wassers, insbesondere von Kalk, aufweist. Dies gewährleistet zusammen mit den zugesetzten Substanzen zur Verminderung der Wasserhärte eine umfassende Kalkbekämpfung sowie eine eventuelle Beseitigung von vorab zudosierten Stoffen. Das zweite Mittel zum Dosieren sowie die Filtervorrichtung können sich aber auch in einer bevorzugten Ausführungsform an einer Verbrauchsstelle, wie z.B. dem Duschkopf befinden, oder an einer anderen Stelle zwischen dem Warmwassergerät und der Verbrauchsstelle.

Von besonderem Vorteil ist es, wenn das Warmwassergerät ein Mittel aufweist, mithilfe dessen das zweite Mittel zum Dosieren und/oder die Filtervorrichtung aktivierbar ist. Somit kann der Anwender die Qualität des Wassers nach seinen Wünschen mit einem einfachen Handgriff einstellen. Das Mittel kann der besseren Nutzbarkeit halber auch zwischen dem Warmwassergerät und der Verbrauchsstelle, z.B. einem Duschkopf oder einem Wasserhahn integriert sein. So zum Beispiel im Duschschlauch, in der Armatur, im Warmwassergerät. Es hat sich gezeigt, dass die Entfernung der Härte des Wassers, chemisch wie mechanisch, dazu führt, dass das Wasser für den Verbraucher subjektiv gesehen an Reinigungsqualität verliert: Mit abnehmender Wasserhärte nimmt die vom Verbraucher subjektiv empfundene Reinigungsqualität des Wassers ab - es wird weich. Verbraucher von sehr weichem Wasser beschreiben das Wasser in der Regel als seifig; diese Personen haben häufig das Gefühl, sie könnten Seifenreste durch das Wasser nicht vollständig abwaschen. Somit besteht im Stand der Technik ein technisches Dilemma: wird die temporäre Härte umfassend entfernt, so werden zwar die betroffenen Heizelemente dadurch geschützt, und es werden Kalkflecken auf Armaturen oder anderen Oberflächen vermieden, zugleich aber führt dies zu einer Verschlechterung der Reinigungsqualität des Wassers. Dieses technische Dilemma löst die vorliegende Erfindung in einer technisch überzeugenden Weise. Möchte sich der Anwender reinigen, so wird er die am Wasserablauf befindliche Filtervorrichtung ausstellen, um zu vermeiden, dass das Wasser zu weich und damit für ihn zu seifig wird. Je nach Bedarf kann er dabei über das zweite Mittel zum Dosieren von Zusatzstoffen dem Wasser Stoffe zusetzen, die einen pflegenden oder erfrischenden Effekt oder einen Wellness-Effekt auf ihn ausüben. Ist die Körper-Reinigung abgeschlossen und möchte er z.B. die Armaturen oder die Fliesen abspülen, so kann der Anwender mit einem einfachen Handgriff das zweite Mittel zum Dosieren von Zusatzstoffen bei Bedarf ausstellen und die am Wasserablauf befindliche Filtervorrichtung aktivieren. Dadurch, dass das Warmwassergerät an seinem Wasserablauf eine Filtervorrichtung zum mechanischen Entfernen von Verunreinigungen des Wassers, insbesondere Kalk sowie vorab zugesetzten Stoffen, aufweist, wird verhindert, dass sich Kalkpartikel oder andere vorab zugesetzte Stoffe an Oberflächen wie z.B. der Duschwand, den Fliesen, den Armaturen oder am Duschkopf niederschlagen. Dadurch wird ein nahezu kalkfreies, hochreines, sehr sauberes Wasser hervorgebracht, mittels dessen er Oberflächen wie Fliesen und Armaturen reinigen kann, ohne dass Kalkflecken und sonstige Verschmutzungen zurückbleiben. Der Anwender kann aber auch nach Bedarf und Wasserqualität die Filtereinrichtung mit dem zweiten Mittel zum Dosieren von Zusatzstoffen kombinieren, z.B. um eine sehr weiches, aber mit pflanzlichen Ölen versetztes Wasser zu erhalten, und zu einem späteren Zeitpunkt ein härteres Wasser ohne Zusätze. Das Warmwassergerät hat somit den Vorteil, dass es aufgrund seiner geringen Verkalkung eine längere Lebenszeit als vergleichbare Geräte aufweist, und dabei zugleich aber eine deutliche Energie- und damit Kosteneinsparung aufweist. Zugleich werden Kalkablagerungen auf sanitären Oberflächen vermieden. Gleichzeitig aber bleiben die Vorzüge des kalkhaltigen Wassers bei der Reinigung erhalten und der Anwender kann die subjektiv wahrnehmbaren Eigenschaften des Wassers nach seinen Wünschen verändern.

Es hat sich als vorteilhaft erwiesen, wenn das Warmwassergerät ein Mittel zum Regeln der Durchflussmenge des Wassers durch die Filtervorrichtung aufweist. Hiermit lässt sich der Betrieb der Filtervorrichtung stufenlos variieren und Wasser sparen sowie die Filternutzungsdauer verlängern.

In einer bevorzugten Ausführungsform weisen das Warmwassergerät oder Geräteteile zwischen dem Warmwassergerät und der Verbrauchsstelle Mittel zum Regeln der Dosiermenge oder Filterleistung des Zusatzstoffes bzw. der Zusatzstoffe in das Wassers auf.

Von Vorteil ist es dabei, wenn die Dosiermittel und Filterleistungen manuell oder automatisch betreibbar sind.

In einer besonders bevorzugten Ausführungsform erfolgt die Dosierung in Abhängigkeit von einer detektierten Wasserhärte oder anderer Werte. So kann der Anwender die vorherrschende Wasserhärte über ein Display-Feld in eine Steuereinheit bzw. Speichereinheit eingeben, und die Steuereinheit kann aus der eingegebenen Wasserhärte die benötigte Menge der Zusatzstoffe berechnen und deren Dosierung veranlassen.

Von besonderem Vorteil ist es, wenn ein Speichermittel zum Speichern bevorzugter Präferenzen vorgesehen ist. So kann für die verschiedenen Mitglieder einer Anwendergruppe, z.B. einer Familie, jeweils ein Speicherplatz vorgesehen werden; durch eine einfache Aktivierung seines betreffenden Speicherplatzes kann das Familienmitglied die Zumischung der von ihm bevorzugten Substanzen und der von ihm bevorzugten Dosiermengen auslösen.

Es hat sich als vorteilhaft erwiesen, wenn die Filtervorrichtung einen Anionen- und/oder Kationenaustauscher und/oder einen Aktivkohlefilter und/oder eine Ultrafiltrationseinheit und/oder eine Mikrofiltrationseinheit und/oder eine Umkehrosmoseeinheit aufweist. Dies gewährleistet eine zuverlässige und umfassende Entfernung der Wasserhärte.

Von Vorteil ist es, wenn die Zusatzstoffe einen die Härte verringernden Effekt aufweisen.

Von besonderem Vorteil ist es dabei, wenn die Zusatzstoffe Phosphate umfassen. Phosphate zeichnen sich dadurch aus, dass sie ein besonders vorteilhaftes Bindungsvermögen für Kalzium- und Magnesium-Ionen, die für die Ausbildung der temporären Härte von entscheidender Bedeutung sind, aufweisen.

In einer bevorzugten Ausführungsform sind über die Dosiermittel für das Wohlbefinden wirksame Stoffe beimischbar. Dabei hat es sich als besonders vorteilhaft erwiesen, wenn diese wirksamen Stoffe eine die Härte verringernde und/oder desinfizierende und/oder pflegende und/oder deodorierende Wirkung aufweisen. Diese Zusatzstoffe können z.B. ätherische Öle oder Ölmischungen sowie Mineralstoffmischungen enthalten. Es können aber auch pflanzliche Zubereitungen und/oder pflanzliche Auszüge dem Wasser zugesetzt werden. Es könne auch nach Bedarf in vorteilhafter Weise arzneiliche Zubereitungen dem Wasser zugesetzt werden.

In einer besonders bevorzugten Ausführungsform ist das Warmwassergerät ein Durchlauferhitzer und/oder ein Speichergerät.

Das erfindungsgemäße Warmwassergerät ermöglicht auf effektive und kostengünstige Weise eine gehobenen Verbraucheransprüchen entsprechende Wasserqualität bei gleichzeitig verlängerter Gerätelebensdauer.

Weitere Vorteile der Ausgestaltungen der Erfindung werden im Folgenden anhand eines Ausführungsbeispiels, auf welches die vorliegende Erfindung jedoch nicht beschränkt ist, sowie unter Bezugnahme auf die beiliegende Zeichnung erläutert.

Darin zeigt schematisch:

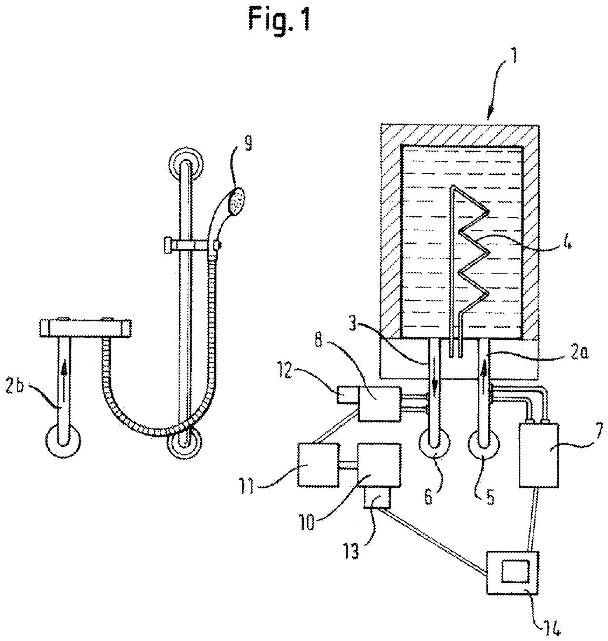

Fig. 1 ein Warmwassergerät in einer Ansicht von vorne.

Bei der nachfolgenden Beschreibung der bevorzugten Ausführungsform der vorliegenden Erfindung bezeichnen gleiche Bezugszeichen gleiche oder vergleichbare Komponenten.

Fig. 1 zeigt ein Warmwassergerät 1, welches mindestens einen Wasserzulauf 2a, mindestens einen Wasserablauf 3, mindestens eine Heizvorrichtung 4, mindestens einen Wandanschluss 5 sowie eine Verbrauchsstelle 6 aufweist. Auf der Seite des Wandanschlusses 5 fließt das Wasser, bevor es das Warmwassergerät 1 erreicht, durch eine Vorrichtung zum Dosieren von Zusatzstoffen 7. Mit Hilfe dieser Vorrichtung zum Dosieren 7 können dem Wasser je nach Bedarf verschiedene Substanzen zugesetzt werden, um die Qualität des Wassers chemisch zu verändern. Das mit den zugesetzten Mischungen versehene Wasser gelangt innerhalb des Warmwassergeräts 1 zum Heizelement 4. Dort wird es erhitzt und strömt über einen Wasserablauf 3 zu einer Filtervorrichtung 8. Von der Filtervorrichtung 8 gelangt das Wasser zur Verbrauchsstelle 6. An gleicher Stelle wie die Filtervorrichtung 8 befindet sich eine zweite Vorrichtung 10 zum Dosieren von Zusatzstoffen. Je nach Bedarf kann der Verbraucher hierbei über ein Mittel 11 zur Betätigung die zweite Vorrichtung 10 zum Dosieren bzw. die Filtervorrichtung 8 aktivieren. Die Filtervorrichtung 8 weist ihrerseits ein Mittel 12 zum Regeln der Durchflussmenge auf. Darüber hinaus weist die zweite Vorrichtung 10 zum Dosieren ein Mittel 13 zum Regeln der Dosiermenge auf. Auf Fig. 1 gelangt das Wasser über eine Wasserableitungsstelle 6 weiter zu einer Unterputzleitung zum Wasserzulauf 2b, von wo es zu einem Duschkopf 9 befördert wird.

Das erfindungsgemäße Warmwassergerät ermöglicht auf effektive und kostengünstige Weise eine gehobenen Verbraucheransprüchen entsprechende Wasserqualität bei gleichzeitig verlängerter Gerätelebensdauer.

### Bezugszeichenliste

- 1: Warmwassergerät
- 2a; 2b: Wasserzulauf
- 3: Wasserablauf
- 4: Heizvorrichtung
- 5: Wandanschluss
- 6: Wasserableitungsstelle
- 7: Mittel zum Dosieren
- 8: Filtervorrichtung
- 9: Verbrauchsstelle
- 10: Zweites Mittel zum Dosieren
- 11: Mittel zur Betätigung von Dosiermittel und/oder Filtervorrichtung
- 12: Mittel zum Regeln der Durchflussmenge
- 13: Mittel zum Regeln der Dosiermenge

## Patentansprüche

1. Warmwassergerät (1) mit einem Wasserstrang, umfassend mindestens einen Wasserzulauf (2a), der Wasser von einem Wandanschluss (5) zu dem Warmwassergerät (1) führt, sowie mindestens einen Wasserablauf (3), der vom Gerät zu einer Wasserableitungsstelle (6) hin führt, sowie mindestens eine Heizvorrichtung (4), wobei das Warmwassergerät (1) an seinem Wasserzulauf (2) mindestens ein Mittel zum Dosieren (7) von Zusatzstoffen zur chemischen Veränderung der Wasserqualität aufweist, **dadurch gekennzeichnet, dass** im Wasserstrang mindestens ein zweites Mittel (10) zum Dosieren von Zusatzstoffen zur chemischen Veränderung der Wasserqualität angeordnet ist, wobei das zweite Mittel (10) zum Dosieren von Zusatzstoffen am Wasserablauf (3) des Warmwassergeräts (1) angeordnet ist.

2. Warmwassergerät (1) nach Anspruch 1, **dadurch gekennzeichnet, dass** am Wasserablauf (3) mindestens eine Filtervorrichtung (8) zum mechanischen Entfernen von Verunreinigungen des Wassers, insbesondere von Kalk, angeordnet ist.

3. Warmwassergerät (1) nach Anspruch 2 **dadurch gekennzeichnet, dass** das Warmwassergerät (1) ein Mittel (11) aufweist, mithilfe dessen das zweite Mittel (10) zum Dosieren und/oder die Filtervorrichtung (8) aktivierbar ist.

4. Warmwassergerät (1) nach Anspruch 2 oder 3, **dadurch gekennzeichnet, dass** Mittel (12) zum Regeln der Durchflussmenge des Wassers durch die Filtervorrichtung (8) vorgesehen sind.

5. Warmwassergerät (1) nach einem der vorherigen Ansprüche, **dadurch gekennzeichnet, dass** Mittel (13) zum Regeln der Dosiermenge des Zusatzstoffes bzw. der Zusatzstoffe in das Wassers vorgesehen sind.

6. Warmwassergerät (1) nach einem der vorherigen Ansprüche, **dadurch gekennzeichnet, dass** die Dosiermittel (7; 10) manuell oder automatisch betreibbar sind.

7. Warmwassergerät (1) nach Anspruch 5 **dadurch gekennzeichnet, dass** das Mittel (13) zum Regeln der Dosiermenge eingerichtet ist, um die Dosierung in Abhängigkeit detektierter Wasserhärte oder anderer Werte bereitzustellen.

8. Warmwassergerät (1) nach einem der vorherigen Ansprüche, **dadurch gekennzeichnet, dass** Speichermittel (14) zum Speichern bevorzugter Präferenzen entsprechend bevorzugter Substanzen und/oder Dosiermengen vorgesehen sind.

9. Warmwassergerät (1) nach einem der Ansprüche 2 bis 8, **dadurch gekennzeichnet, dass** die Filtervorrichtung (8) einen Kationenaustauscher und/oder einen Aktivkohlefilter und/oder eine Ultrafiltrationseinheit und/oder eine Mikrofiltrationseinheit und/oder eine Umkehrosmoseeinheit aufweist.

10. Warmwassergerät (1) nach einem der vorherigen Ansprüche, **dadurch gekennzeichnet, dass** die Zusatzstoffe einen die Härte verringernden Effekt aufweisen.

11. Warmwassergerät (1) nach einem der vorherigen Ansprüche, **dadurch gekennzeichnet dass** die Zusatzstoffe Phosphate umfassen.

12. Warmwassergerät (1) nach einem der vorhergehenden Ansprüche, **dadurch gekennzeichnet, dass** die über die Dosiermittel zuführbaren Stoffe eine die Härte verringernde und/oder desinfizierende und/oder pflegende und/oder deodorierende Wirkung aufweisen.

13. Warmwassergerät (1) nach einem der vorhergehenden Ansprüche, **dadurch gekennzeichnet, dass** das Warmwassergerät (1) ein Durchlauferhitzer und/oder ein Speichergerät ist.

## Claims

1. Hot water unit (1) with a water line, comprising at least one water inflow (2a), which leads water from a wall connection (5) to the hot water unit (1), and at least one water outflow (3), leading from the unit towards a water discharge point (6), and at least one heating device (4), where the hot water unit (1) has at its water inflow (2) at least one means for the dosing (7) of additives for chemically changing the water quality, **characterised in that** at least one second means (10) for the dosing of additives for chemically changing the water quality is arranged in the water line, wherein the second means (10) for the dosing of additives is arranged at the water outflow (3) of the hot water unit (1).

2. Hot water unit (1) according to claim 1, **characterised in that** at least one filter device (8) for the mechanical removal of impurities from the water, in particular limescale, is arranged at the water outflow (3).

3. Hot water unit (1) according to claim 2, **characterised in that** the hot water unit (1) has a means (11), with the aid of which the second means (10) for dosing and/or the filter device (8) can be activated.

4. Hot water unit (1) according to claim 2 or 3, **characterised in that** means (12) for regulating the flow rate of the water is provided by means of the filter device (8).

5. Hot water unit (1) according to one of the preceding claims, **characterised in that** means (13) for regulating the dosing quantity of the additives or the additives in the water are provided.

6. Hot water unit (1) according to one of the preceding claims, **characterised in that** the dosing means (7; 10) can be operated manually or automatically.

7. Hot water unit (1) according to claim 5, **characterised in that** the means (13) for regulating the dosing quantity is configured to provide the dosing as a function of detected water hardness or other values.

8. Hot water unit (1) according to one of the preceding claims, **characterised in that** storage means (14) for the storage of desired preferences according to preferred substances and/or dosing quantities are provided.

9. Hot water unit (1) according to one of claims 2 to 8, **characterised in that** the filter device (8) has a cation exchanger and/or an activated carbon filter and/or an ultrafiltration unit and/or a microfiltration unit and/or a reverse osmosis unit.

10. Hot water unit (1) according to one of the preceding claims, **characterised in that** the additives have a hardness-reducing effect.

11. Hot water unit (1) according to one of the preceding claims, **characterised in that** the additives comprise phosphates.

12. Hot water unit (1) according to one of the preceding claims, **characterised in that** the substances which can be supplied via the dosing means have a hardness-reducing and/or disinfectant and/or soothing and/or deodorizing effect.

13. Hot water unit (1) according to one of the preceding claims, **characterised in that** the hot water unit (10) is a continuous-flow heater and/or a storage device.

## Revendications

1. Appareil de production d'eau chaude (1) avec un circuit d'eau, comprenant au moins une arrivée d'eau (2a) qui mène l'eau d'une prise murale (5) à l'appareil de production d'eau chaude (1) et au moins une sortie d'eau (3) qui mène de l'appareil vers un point d'évacuation d'eau (6), ainsi qu'au moins un dispositif de chauffage (4), l'appareil de production d'eau chaude (1) présentant, sur son arrivée d'eau (2), au moins un moyen (7) pour le dosage d'additifs servant à modifier chimiquement la qualité de l'eau, **caractérisé en ce que** dans le circuit d'eau, est disposé au moins un deuxième moyen (10) pour le dosage d'additifs servant à modifier chimiquement la qualité de l'eau, ledit deuxième moyen (10) pour le dosage d'additifs étant disposé sur la sortie d'eau (3) de l'appareil de production d'eau chaude (1).

2. Appareil de production d'eau chaude (1) selon la revendication 1, **caractérisé en ce que** sur la sortie d'eau (3), est disposé au moins un dispositif de filtration (8) servant à éliminer mécaniquement les impuretés de l'eau, notamment le calcaire.

3. Appareil de production d'eau chaude (1) selon la revendication 2, **caractérisé en ce que** l'appareil de production d'eau chaude (1) présente un moyen (11) permettant d'activer le deuxième moyen (10) de dosage et/ou le dispositif de filtration (8).

4. Appareil de production d'eau chaude (1) selon la revendication 2 ou 3, **caractérisé en ce que** des moyens (12) sont prévus pour régler le débit de l'eau dans le dispositif de filtration (8).

5. Appareil de production d'eau chaude (1) selon l'une des revendications précédentes, **caractérisé en ce que** des moyens (13) sont prévus pour régler la quantité dosée du ou des additifs dans l'eau.

6. Appareil de production d'eau chaude (1) selon l'une des revendications précédentes, **caractérisé en ce que** les moyens de dosage (7 ; 10) peuvent fonctionner manuellement ou automatiquement.

7. Appareil de production d'eau chaude (1) selon la revendication 5, **caractérisé en ce que** le moyen (13) pour régler la quantité dosée est adapté pour fournir le dosage en fonction de la dureté de l'eau détectée ou d'autres valeurs.

8. Appareil de production d'eau chaude (1) selon l'une des revendications précédentes, **caractérisé en ce que** des moyens de mémorisation (14) sont prévus pour mémoriser des préférences conformément à des substances et/ou quantités dosées privilégiées.

9. Appareil de production d'eau chaude (1) selon l'une des revendications 2 à 8, **caractérisé en ce que** le dispositif de filtration (8) comporte un échangeur de cations et/ou un filtre à charbon actif et/ou une unité d'ultrafiltration et/ou une unité de microfiltration et/ou une unité d'osmose inverse.

10. Appareil de production d'eau chaude (1) selon l'une des revendications précédentes, **caractérisé en ce que** les additifs ont un effet réduisant la dureté.

11. Appareil de production d'eau chaude (1) selon l'une des revendications précédentes, **caractérisé en ce que** les additifs comprennent des phosphates.

12. Appareil de production d'eau chaude (1) selon l'une des revendications précédentes, **caractérisé en ce que** les substances pouvant être introduites par les moyens de dosage ont un effet réduisant la dureté de l'eau et/ou désinfectant et/ou soignant et/ou déodorisant.

13. Appareil de production d'eau chaude (1) selon l'une des revendications précédentes, **caractérisé en ce que** l'appareil de production d'eau chaude (1) est un chauffe-eau instantané et/ou un chauffe-eau à accumulation.
